(19) Europäisches Patentamt
European Patent Office
Office européen des brevets

(11) **EP 1 999 843 B1**

(12) **EUROPÄISCHE PATENTSCHRIFT**

(45) Veröffentlichungstag und Bekanntmachung des Hinweises auf die Patenterteilung:
**11.04.2012   Patentblatt 2012/15**

(21) Anmeldenummer: **07711224.1**

(22) Anmeldetag: **02.03.2007**

(51) Int Cl.:
***H02N 2/14*** *(2006.01)*

(86) Internationale Anmeldenummer:
**PCT/DE2007/000391**

(87) Internationale Veröffentlichungsnummer:
**WO 2007/098751 (07.09.2007 Gazette 2007/36)**

(54) **VERFAHREN  ZUR LASTDETEKTION AN EINER FESTKÖRPERAKTOR-ANTRIEBSVORRICHTUNG**

METHOD FOR LOAD DETECTION ON A SOLID STATE ACTUATOR/MOTOR DEVICE

PROCÉDÉ DE DÉTECTION DE CHARGE SUR UN DISPOSITIF D'ENTRAÎNEMENT À ACTIONNEUR À CORPS SOLIDE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **02.03.2006   DE 102006009728**

(43) Veröffentlichungstag der Anmeldung:
**10.12.2008   Patentblatt 2008/50**

(73) Patentinhaber:
• **Kappel, Andreas**
  **85649 Brunnthal (DE)**
• **Gottlieb, Bernhard**
  **81739 München (DE)**
• **WALLENHAUER, Carsten**
  **01987 Schwarzheide (DE)**

(72) Erfinder:
• **Kappel, Andreas**
  **85649 Brunnthal (DE)**
• **Gottlieb, Bernhard**
  **81739 München (DE)**
• **WALLENHAUER, Carsten**
  **01987 Schwarzheide (DE)**

(56) Entgegenhaltungen:
**EP-A2- 1 098 429      DE-A1-102005 024 317**
**US-A- 5 612 598**

Bemerkungen:
Die Akte enthält technische Angaben, die nach dem Eingang der Anmeldung eingereicht wurden und die nicht in dieser Patentschrift enthalten sind.

EP 1 999 843 B1

**Beschreibung**

Die Erfindung bezieht sich auf ein Verfahren zur Lastdetektion an einer Festkörperaktor-Antriebsvorrichtung gemäß den oberbegrifflichen Merkmalen des Patentanspruchs 1.

In DE 1 995 294 6 A1, US 6 664 710 B1, EP 1 098 429 A2, EP 1 098 429 B1 bzw. JP 2 001 161 083 A1 ist ein piezoelektrischer Antrieb beschrieben, der als Piezoringmotor bezeichnet wird. Eine Festkörperaktor-Antriebsvorrichtung in Art eines solchen Piezoringmotors weist eine Welle mit einer Wellenachse, eine Antriebseinrichtung, welche Festkörperaktoren aufweist, zum Versetzen der Welle in eine Rotation um die Wellenachse und ein Lager mit einer Lagerwandung zum Lagern der Welle auf. Die Antriebseinrichtung ist im Wesentlichen ringförmig mit einer Durchgangsöffnung ausgebildet, wobei der Innendurchmesser der Durchgangsöffnung etwas größer als der Außendurchmesser der hindurchführenden Welle ausgebildet ist. Durch die in radialer Richtung auf die Antriebseinrichtung einwirkenden Festkörperaktoren wird die Antriebseinrichtung gegenüber der Welle in eine seitliche Hin- und Herbewegung versetzt, welche die an dem Innenumfang der Durchgangsöffnung anliegende Welle in die Rotation versetzt.

Der Piezoringmotor zeichnet sich unter anderem durch ein hohes Drehmoment, eine hohe Stellgenauigkeit, eine flache Bauform und inhärente Sensoreigenschaften aus. Die Kombination dieser positiven Eigenschaften ist unter Stellantrieben einzigartig. Bisher war es jedoch nur unzureichend möglich, die durch die verwendeten piezoelektrischen Aktoren inhärenten Sensoreigenschaften während des Motorbetriebes zur genauen Messung des Drehmomentes zu nutzen.

Bekannt ist für einen solchen Piezoringmotor ein Verfahren zur Messung des Lastmomentes durch Aufstellen einer Energiebilanz an den piezoelektrischen Aktoren. Bei einer solchen Messung steht einer hohen Lade- und Entladeleistung bzw. Blindleistung an den piezoelektrischen Aktoren eine um mindestens eine Größenordnung kleinere abgegebene mechanische Leistung gegenüber. Das Messsignal wird durch ein leistungsstarkes Ansteuersignal überdeckt. Des Weiteren ist die Ladungsmessung als Messung des Integrals Strom-Zeitfunktion oft von einer starken Drift überlagert.

Die Aufgabe der Erfindung besteht darin, ein einfaches und möglichst wenig durch Drifteinflüsse überlagertes Verfahren zur Lastdetektion an einer Festkörperaktor-Antriebsvorrichtung, insbesondere an einem Ringmotor vorzuschlagen.

Diese Aufgabe wird durch das Verfahren zur Lastdetektion an einer Festkörperaktor-Antriebsvorrichtung mit den Merkmalen des Patentanspruchs 1 gelöst. Vorteilhafte Ausgestaltungen sind Gegenstand von abhängigen Ansprüchen.

Bevorzugt wird demgemäß ein Verfahren zur Lastdetektion an einer Festkörperaktor-Antriebsvorrichtung, die eine Welle, einen Antriebskörper mit einer Öffnung, durch welche die Welle führt, und zumindest zwei Festkörperaktoren am Antriebskörper aufweist, wobei die Festkörperaktoren mittels einer Steuergröße ansteuerbar sind zum Erregen des Antriebskörpers zum Versetzen der Welle in Rotation, wobei ein Lastmoment mittels einer Festkörperaktor-abgegriffenen Größe bestimmt wird, wobei an zumindest einem der Festkörperaktoren als die Größe eine aus dem Lastmoment resultierende lastabhängige Größe gemessen wird, eine Phasendifferenz zwischen der Steuergröße und der lastabhängigen Größe bestimmt wird und das Lastmoment mittels der Phasendifferenz bestimmt wird.

Als die Steuergröße wird gemäß verschiedener Ausführungsformen eine Spannungszeitfunktion und als die lastabhängige Größe eine Strom- oder Ladungszeitfunktion verwendet oder als die Steuergröße eine Strom- oder Ladungszeitfunktion und als die lastabhängige Größe eine Spannungszeitfunktion verwendet.

Die Phasendifferenz kann vorteilhaft zwischen einerseits Nulldurchgängen der Steuergröße und andererseits Nulldurchgängen der lastabhängigen Größe eine Strom- oder Ladungszeitfunktion bestimmt werden.

Das Lastmoment wird vorzugsweise proportional der lastabhängigen Größe näherungsweise bestimmt gemäß

$$M = \sin \Delta\varphi \cdot c \cdot a \cdot r$$

mit einer Sensorkonstante $c$ . $a$ des Festkörperaktors, $r$ als Wellenradius der Welle und $\Delta\varphi$ als der resultierenden Phasenverschiebung.

Zum Erfassen der Phasenverschiebung werden insbesondere Nulldurchgänge der Steuergröße und Nulldurchgänge der von dem Festkörperaktor abgegriffenen lastabhängigen Größe bestimmt. Die Steuergröße und die von dem von dem Festkörperaktor abgegriffene lastabhängige Größe werden hochpass-gefiltert, es werden jeweils Nulldurchgänge detektiert und Ausgangssignale der Bestimmung der Nulldurchgänge werden Ausschließlich-Oder verglichen. Eine Pulsbreite wird insbesondere bestimmt gemäß

$$\Delta t = \frac{T}{2\pi} \cdot \Delta\varphi$$

durch Zählen eines Zählerwerts und einer Periodendauer von Schwingungen eines Oszillators.

Ein motoreigenes als Modulation abhängig vom Drehwinkel der Welle dem Messsignal überlagertes Lastmoment wird bevorzugt als Referenzsignal aufgenommen und zur Kompensation des motoreigenen Lastmoments genutzt.

Bei Motorstillstand kann ein anderes Messverfahren verwendet werden, welches auf der direkten Kraftübertragung von der Welle beruht.

Bevorzugt wird außerdem eine Vorrichtung zur Lastdetektion an einer Festkörperaktor-Antriebsvorrichtung, die eine Welle, einen Antriebskörper mit einer Öffnung, durch welche die Welle führt, und zumindest zwei Festkörperaktoren am Antriebskörper zum Erregen des Antriebskörpers und darüber Versetzen der Welle in Rotation und eine Detektionseinrichtung zum Durchführen der Lastdetektion, insbesondere zum Durchführen der Lastdetektion mit einem solchen Verfahren, aufweist, wobei die Detektionseinrichtung ausgebildet und ausgelegt ist, an zumindest einem der Festkörperaktoren als die Größe eine aus dem Lastmoment resultierende lastabhängige Größe zu messen, eine Phasendifferenz zwischen der Steuergröße und der lastabhängigen Größe zu bestimmen und das Lastmoment mittels der Phasendifferenz zu bestimmen.

Vorzugsweise verwendet entweder eine Treiberstufe als die Steuergröße eine Spannungszeitfunktion und die lastabhängige Größe ist eine Strom- oder Ladungszeitfunktion oder eine Treiberstufe verwendet als die Steuergröße eine Strom- oder Ladungszeitfunktion und die lastabhängige Größe ist eine Spannungszeitfunktion.

Nulldurchgangsdetektoren dienen zum Bestimmen einerseits von Nulldurchgängen der Steuergröße und andererseits von Nulldurchgängen der lastabhängige Größe und eine nachgeschaltete Schaltung dient zum Bestimmen der Phasenverschiebung mittels der Nulldurchgänge.

Grundlage des Verfahrens zur Lastdetektion bildet die Phasendifferenzmessung anstelle einer für sich bekannten Amplitudenmessung. Das Messprinzip ist nicht nur für einen spannungsgeregelt betriebenen Piezoringmotor sondern ebenso für einen ladungsgeregelt betriebenen Piezoringmotor einsetzbar. Spannung und Ladung sind komplementär.

Eine erste bevorzugte Ausführungsform besteht in einem Verfahren, bei welchem die Phasenverschiebung einer Ladungs-Zeitfunktion bezüglich einer vorgegebenen Spannungs-Zeitfunktion an einem piezoelektrischen Aktor oder unterschiedlichen piezoelektrischen Aktoren bei einem aus EP 1 098 429 B1 bekannten piezoelektrischen Ringmotor zur Messung des äußeren Last- oder Antriebsmomentes und des Inneren motoreigenen Lastmomentes genutzt wird. Komplementär dazu besteht eine zweite bevorzugte Ausführungsform in einem Verfahren, bei welchem die Phasenverschiebung der Spannungs-Zeitfunktion bezüglich einer vorgegebenen Ladungs-Zeitfunktion an einem piezoelektrischen Aktor oder unterschiedlichen piezoelektrischen Aktoren bei einem aus DE 199 52 946 A1 bekannten piezoelektrischen Ringmotor zur Messung des äußeren Last- oder Antriebsmomentes und des inneren motoreigenen Lastmomentes genutzt wird.

Solche Verfahren erlauben eine einfache und präzise Messung des Lastmomentes eines Stellantriebs während dessen Motorbetriebes. Über die genaue Lastmomentmessung hinaus, können die gewonnenen Daten zur Eigendiagnose des Stellantriebs verwendet werden.

Einsetzbar sind solche Verfahren zur Lastmessung beispielsweise in der Robotik, z. B. bei einer Mensch-Maschine-Interaktion, in der Automobiltechnik, z. B. für eine Klappenverstellung mit integriertem Luftmassensenor, in der Luft-und Raumfahrttechnik, z. B. für einen intelligenten Steuerklappenantrieb für einen Abgasstrahl.

Alternativ zu piezoelektrischen Festkörperaktoren können als Antriebselemente aber auch beliebige andere Festkörperaktoren eingesetzt werden, z. B. elektrostriktive oder magnetostriktive Aktoren.

Ein Ausführungsbeispiel wird nachfolgend anhand der Zeichnung näher erläutert. Es zeigen:

Fig. 1 in Schnittansicht eine Draufsicht auf eine Festkörperaktor-Antriebsvorrichtung mit einer Welle und mit einer Schaltungsanordnung zum Ansteuern der Festkörperaktor-Antriebsvorrichtung und zum Erfassen einer einwirkenden Last,

Fig. 2 vier Betriebsstellungen einer solchen Festkörperaktor-Antriebsvorrichtung mit zwei Festkörperaktoren und Spannungs-Phasenwinkel-Diagrammen dafür,

Fig. 3 einen Montageablauf einer solchen Festkörperaktor-Antriebsvorrichtung zur Verdeutlichung verschiedener Lastzustände,

Fig. 4 Spannungs-Phasenwinkel-Diagramme und dazu zeitgleiche auf Ladungsmessung beruhende Kraft- bzw. Last-Phasenwinkel-Diagramme,

Fig. 5 eine beispielhafte Schaltungsanordnung zur Lastmessung mittels solcher Diagramme gemäß Fig. 4,

Fig. 6 eine Empfindlichkeit einer Drehmomentmessung und

Fig. 7 das Ergebnis dreier beispielhafter Messungen.

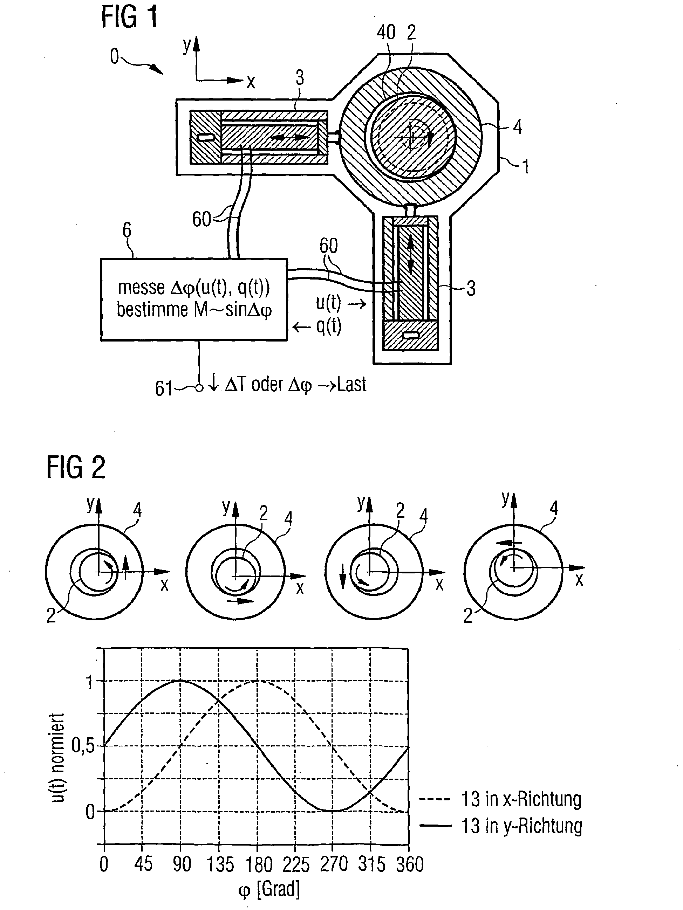

Wie dies aus Fig. 1 ersichtlich ist, besteht eine beispielhafte Festkörperaktor-Antriebsvorrichtung 0 aus einer Vielzahl von Einzelkomponenten, wobei die dargestellten Komponenten um weitere Komponenten ergänzbar sind bzw. gegen gleich wirkende Komponenten anderer Bauart austauschbar sind.

Die Festkörperaktor-Antriebsvorrichtung 0 weist ein lediglich schematisch skizziertes Gehäuse 1 auf, welches die weiteren Komponenten aufnimmt. In dem Gehäuse 1 ist mittels einer Lageranordnung eine Welle 2 gelagert, wobei sich eine Wellenachse der Welle 2 in axialer Richtung aus dem Gehäuse 1 heraus erstreckt. Zum Versetzen der Welle 2 um die Wellenachse in eine Wellenrotation dient eine Antriebsvorrichtung. Die Antriebsvorrichtung besteht im Wesentlichen aus vorzugsweise zwei oder mehr Festkörperaktoren 3 und einem Antriebskörper 4, welcher über die Festkörperaktoren 3 fest mit einer Innenwandung des Gehäuses 1 verbunden ist. Die Festkörperaktoren 3 sind dabei derart angeordnet, dass sie den Antriebskörper 4 relativ zu dem Gehäuse 1 in eine Translationsbewegung in einer Ebene x, y senkrecht zu der axialen Richtung versetzen. Die Translation versetzt den Antriebskörper 4 in eine Hin- und Herbewegung, vorteilhafterweise in eine kreisähnliche Bewegung. Der Antriebskörper 4 weist eine kreisförmige Öffnung 40 auf, welche insbesondere als Durchgangsöffnung ausgebildet ist. Durch die Öffnung 40 des Antriebskörpers 4 führt die Welle 2 hindurch, wobei der Außendurchmesser der Welle 2 geringer als der Innendurchmesser der Öffnung 40 des Antriebskörpers 4 ist. Der Antriebskörper 4 wird durch die Festkörperaktoren 3 derart verstellt, dass eine Wellen-Außenwandung vorzugsweise durchgehend mit einer Antriebskörper-Innenwandung in Reibkontakt steht, so dass durch die Bewegung des Antriebskörpers 4 die Welle 2 in die Wellenrotation versetzt wird.

Zum Antreiben der Festkörperaktoren 3 weist die Festkörperaktor-Antriebsvorrichtung 0 eine Steuereinrichtung 6 als integrierte oder gegebenenfalls auch eigenständige externe Komponente auf. Die Steuereinrichtung 6 ist über Leiter 60 mit den Festkörperaktoren 3 verbunden, um an den Festkörperaktoren 3 je nach Ausgestaltung Ladungen oder Spannungen anzulegen, damit sich Festkörperaktoren 3 entsprechend der Ansteuerung ausdehnen und/oder zusammenziehen.

Die Steuereinrichtung 6 umfasst eine gegebenenfalls auch rechnertechnisch umgesetzte Detektorschaltung, welche eine Ladungs-Zeit-Funktion mit einer Spannungs-Zeit-Funktion vergleicht. Dabei wird ausgenutzt, dass eine wirkende Kraft bzw. Last proportional zur Ladung ist. Die Steuereinrichtung 6 ermittelt somit eine Phasendifferenz $\Delta\varphi$ zwischen vorzugsweise einerseits Nulldurchgängen einer entsprechenden Spannungszeitkurve u(t) der Erregerspannung zum Erregen der Festkörperaktoren 3 und andererseits Nulldurchgängen einer messbaren Ladungszeitkurve q(t). Letztendlich kann daraus auf eine mechanische Last der Festkörperaktor-Antriebsvorrichtung 0 und weitere Faktoren geschlossen werden, da eine auf die Festkörperaktor-Antriebsvorrichtung 0 einwirkende Last zu einer Verschiebung der Spannungskurve u(t) bzw. der Ladungskurve q(t) relativ zueinander führt. Derartige bestimmte Faktoren können direkt von der Steuereinrichtung 6 zum Regeln der Festkörperaktor-Antriebsvorrichtung 0 verwendet werden und/oder über beispielsweise einen Abgriff 61 zur Verwertung durch andere Verfahren, Komponenten oder Vorrichtungen bereitgestellt werden.

Ein an der Welle 2 angreifendes Wellen-Drehmoment wird im Kontaktpunkt zwischen der Antriebskörper-Innenwandung des Antriebskörpers 4 und der Welle 2 in Form einer tangential gerichteten Kraft auf die Antriebskörper-Innenwandung übertragen und bewirkt dort ein üblicherweise etwa gleich großes Antriebskörper-Drehmoment bezüglich des Mittelpunktes des Antriebskörpers 4. Das Antriebskörper-Drehmoment wird über den Antriebskörper 4 je nach Wirkrichtung auf alle oder einen Teil der Festkörperaktoren 3 übertragen und letztendlich von den Festkörperaktoren 3 auf das Gehäuse 1 übertragen. Neben externen Kräften, welche ein solches Drehmoment ausüben, werden auch durch interne Kräfte der Komponenten der Antriebsvorrichtung solche Drehmomente ausgeübt.

Der Zusammenhang zwischen Ladung und Kraft bzw. Spannung und Kraft ist nahezu linear. Ladungen bzw. Spannungen, welche durch Lasten induziert werden, sind mittels geeigneter elektronischer Schaltungen durch die Steuereinrichtung 6 elektronisch leicht auswertbar.

Fig. 1 zeigt somit Draufsicht als funktionswichtige Bestandteile eines beispielhaften Piezoringmotors einen Ring als den Antriebskörper 4, die Welle 2 und zwei piezoelektrische Aktoren als die Festkörperaktoren 3. Die biegesteife Welle 2 ist drehbar aber transversal, d. h. senkrecht zu ihrer Zylinderachse, steif in dem Motorgehäuse z.B. durch Gleit- oder Wälzlager eingebaut. Die Welle 2 wird von dem mechanisch steifen, zylindrischen Ring umfasst, dessen Innendurchmesser den Wellendurchmesser um typisch aber nicht zwingend notwendig 10 $\mu$m - 30 $\mu$m übersteigt. Um ein möglichst hohes Antriebs-Drehmoment erreichen zu können, wird das Übermaß des Ring-Innendurchmessers wesentlich kleiner als die maximal erreichbare Auslenkung der piezoelektrischen Linear-Aktoren in einem Bereich von typisch 50 $\mu$m-90 $\mu$m gehalten. Die Auslenkung entspricht einem Stellweg. Zwei piezoelektrische Linear-Aktoren sind als die Festkörperaktoren 3 im Winkel von vorzugsweise 90° relativ zueinander mechanisch steif an einem Ende mit dem ringförmigen Antriebskörper 4 und am entgegen gesetzten Ende mit dem Gehäuse z.B. durch Schweißen, eine Schraub- oder eine Klemmverbindung verbunden.

Durch die Ansteuerung der Festkörperaktoren 3 mit zwei sinusförmigen Spannungs-Zeitfunktionen u(t) mit einem Phasenversatz von $\Delta\gamma$=+/-90°wird der Antriebskörper 4 kreisförmig translatiert. Die Welle 2 rollt, getrieben von der Translation des Antriebskörpers 4, auf der Innenfläche des Antriebskörpers 4 ab, wie dies anhand Fig. 2 im Fall der Erzeugung einer Linksdrehung im Piezomotor skizziert ist. Über das Vorzeichen des Phasenversatzes wird die Drehrichtung der Welle 2 kontrolliert.

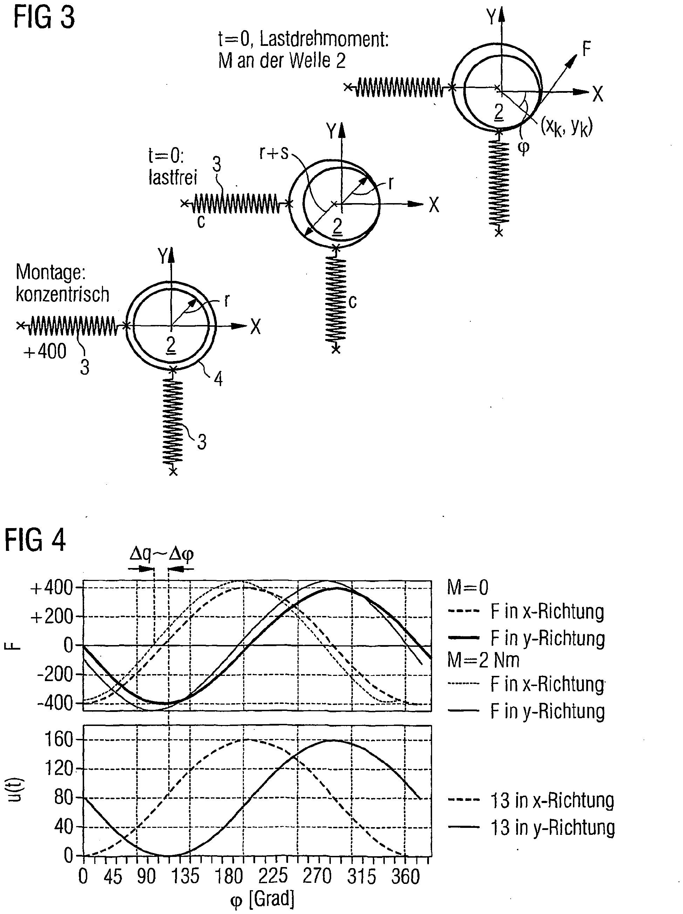

Beispielhaft wird in der folgenden Betrachtung von einem idealen kapazitiven linearen Festkörperaktoren 3 ausgegangen, der spannungsgeregelt angesteuert wird. Die Ansteuerspannung ist die Steuergröße und die Ladung die Messgröße. Im Motorbetrieb, ohne wirkende Last, wird den Aktoren nach Fig. 2 ein sinusförmiger Spannungs-Zeitverlauf als die Spannungs-Zeitfunktionen u(t) aufgeprägt. Die Welle 2 rollt mit konstanter Andruckkraft auf der Innenfläche des Antriebskörpers 4 ab. Die konstante Kraftrückwirkung auf den Festkörperaktor 3 generiert eine Landung q deren Zeitfunktion als die Ladungs-Zeitfunktion q(t) die gleiche Phasenlage φ wie die Ansteuerspannung des zugehörigen Festkörperaktors 3 aufweist. Kraftwirkung und Spannung liegen in Phase. Deutlich wird dies in Fig. 3 für t=0 im lastfreien Fall.

Zieht der in x-Richtung angeordnete Festkörperaktor 3 am Antriebskörper 4, so drückt die Welle 2 auf der gegenüberliegenden Seite des Antriebskörpers 4 gegen den Antriebskörper 4. In diesem Fall bzw. bei dieser Phasenlage vereint der Festkörperaktor 3 die gesamte Kraftwirkung auf sich. Sowohl die Ansteuerspannung als auch die auf den Festkörperaktor 3 wirkende Kraft sind minimal. Wirkt ein Lastmoment M auf die Welle 2, wie in Fig. 3 für t=0 mit Lastmoment an der Welle 2 dargestellt, verschiebt sich der Kontaktpunkt $(x_K, y_k)$ zwischen Welle 2 und Antriebskörper 4 um den Winkel φ. Diese Verschiebung führt zu einer Phasenverschiebung zwischen der Ansteuerung, hier der Spannungs-Zeitfunktion u(t) und der in Fig. 4 demgegenüber skizzierten Kraft-Zeitfunktion am Festkörperaktor 3. Durch die auf den piezoelektrischen Festkörperaktor 3 wirkende Kraft wird eine Ladung q generiert, wobei das Lastmoment M eine Phasenverschiebung Δφ der Ladungszeitfunktion q(t) gegenüber der Spannungs-Zeitfunktion u(t) bewirkt. Das heißt ein auftretendes Lastmoment M kann durch die Phasenverschiebung Δφ zwischen der Spannungs-Zeitfunktion u(t) der Ansteuerspannung und der Ladungszeitfunktion q(t) gemessen werden. Gleiches gilt komplementär für einen ladungsgesteuerten Piezoringmotor.

Folgende Gleichungen lassen sich aus dem Aufbau des Piezoringmotors ableiten und erlauben die Berechnung der Phasendifferenz bzw. Phasenverschiebung Δφ zwischen der Ansteuerfunktion und der gemessenen Ladungszeitfunktion q(t) aus dem auf die Welle 2 wirkenden Lastmoment M.

Die Gleichungen sind aus einem Aufbau nach Fig. 1 abgeleitet und nur für rechtwinklig angeordnete Festkörperaktoren 3 gültig. Bei einer nicht rechtwinkligen Anordnung der Festkörperaktoren 3 wird eine Koordinatentransformation vom kartesischen in ein affinisches, d.h. schiefwinkliges Koordinatensystem durchgeführt. Das Wirkprinzip bleibt davon jedoch unberührt.

Die gemessene Ladung q ist über einen Proportionalitätsfaktor als einer Sensorkonstante c · a direkt mit der auf den Aktor wirkenden Kraft F und mit der Phasenverschiebung Δφ verknüpft gemäß

$$\Delta\varphi = \arcsin\left(\frac{F}{c \cdot a}\right)$$

mit a als halber Leerlaufauslenkung des Festkörperaktors 3 [m], c als Longitudinalsteifigkeit des Festkörperaktors 3 [N/m], F als tangential am Wellenumfang wirkender Kraft [N], wobei die Kraft proportional der Ladung q läuft, und Δφ als der resultierenden Phasenverschiebung [rad].

Die Kraft F resultiert aus dem angreifenden Lastmoment M. Durch das Ersetzen der Kraft F durch das Drehmoment M wird folgende Gleichung abgeleitet mit r als Wellenradius [m] der Welle 2 und M als dem Dreh- bzw. Lastmoment [Nm]

$$\Delta\varphi = \arcsin\left(\frac{M}{c \cdot a \cdot r}\right).$$

Der Zusammenhang zwischen wirkendem Lastmoment M und der Phasenverschiebung Δφ wird nach Umstellung der Gleichung entsprechend beschrieben durch

$$M = \sin\Delta\varphi \cdot c \cdot a \cdot r.$$

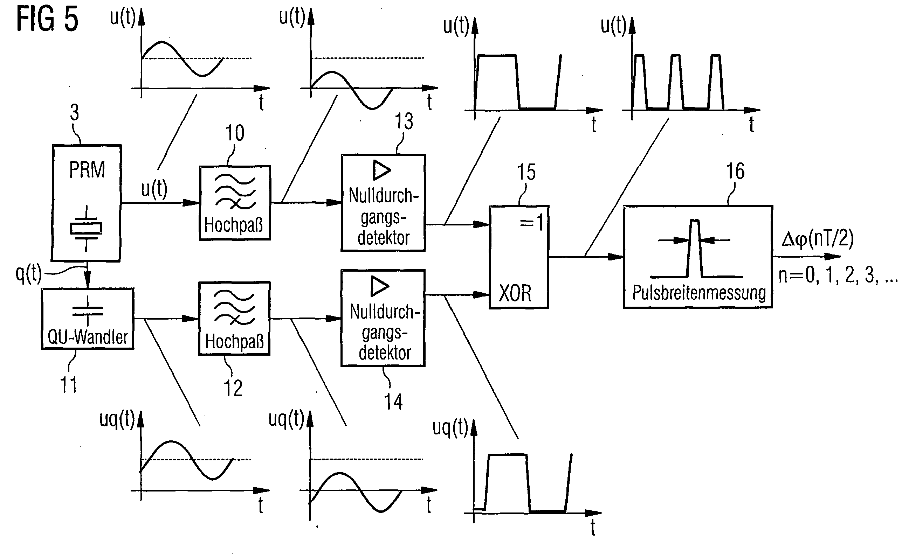

Fig. 5 zeigt beispielhaft einen symbolischen Aufbau zur Phasendifferenzmessung und damit entsprechend zur Drehmomentmessung an einem Piezoringmotor. Dabei sind neben Komponenten, welche optional auch rechentechnisch mittels z.B. eines integrierten Prozessors umsetzbar sind, zur Erleichterung des Verständnisses Signalverläufe skizziert.

Ausgangspunkt der Betrachtung ist einer der Festkörperaktoren 3 in Form z.B. eines piezoelektrischen Multilayer-Aktors des Piezoringmotors. Die Ansteuerspannung eines der Festkörperaktoren 3 ist durch die Treiberstufe des Piezoringmotors als der Festkörperaktor-Antriebsvorrichtung 0 vorgegeben und wird als Spannungszeitfunktion u(t) einem ersten Hochpass 10 zugeführt. Parallel zur Spannung am Festkörperaktor 3 wird in einem zweiten Kanal die Piezoladung des Festkörperaktors 3 gemessen und als Ladungszeitfunktion q(t) z. B. über einen Referenzkondensator 11 in eine proportionale Spannung uq(t) gewandelt. Diese proportionale Spannung uq(t) wird für die Bestimmung der Phasendifferenz vorzugsweise anstelle der hier ansonsten angegebenen Ladungszeitfunktion q(t) verwendet. Auch dieses Spannungssignal wird einem Hochpass 12 zugeführt. Die Hochpassschaltungen beider Kanäle entfernen den Gleichanteil der Signale. Offset- und Drift-Erscheinungen werden dadurch wirksam kompensiert. Dies ist möglich, da die Amplitude der Spannungssignale nicht von Interesse ist, sondern gemäß einer besonders bevorzugten Ausführungsform nur die Nulldurchgänge.

Die Nulldurchgänge werden durch jeweils einen dem jeweiligen Hochpass 10, 12 nachgeschalteten Nulldurchgangsdetektor 13, 14 detektiert. Bei den Nulldurchgangsdetektoren 13, 14 handelt es sich vorzugsweise um eine Verstärkerschaltung mit sehr hoher Verstärkung und einem signalbegrenzten Ausgang. Vergleichbar ist eine solche Schaltung mit einem Demodulator für ein frequenzmoduliertes Signal. Die sinusähnlichen Eingangssignale der Nulldurchgangsdetektoren 13, 14 werden durch die Nulldurchgangsdetektoren 13, 14 zu digital kompatiblen Rechtecksignalen umgeformt, deren Flanken in Phase mit den Nulldurchgängen des Eingangssignals liegen. Die Ausgangssignale beider Nulldurchgangsdetektoren 13, 14 werden durch ein nachgeschaltetes XOR-Gatter 15 (XOR: (Ausschließlich-Oder) verglichen. Sind die Rechtecksignale beider Kanäle in Phase, wird am Ausgang des Gatters 15 eine logische "0" ausgegeben. Tritt eine Phasenverschiebung Δφ auf, wird durch das Gatter für die entsprechende Zeitspanne bzw. Pulsbreite Δt eine logische "1" ausgegeben.

Die Gleichung

$$\Delta t = \frac{T}{2\pi} \cdot \Delta \varphi$$

gibt den Zusammenhang zwischen der Pulsbreite Δt der Pulse am XOR Gatterausgang und der Phasenverschiebung Δφ der Ladungs- und Spannungszeitfunktion q(t), u(t) am piezoelektrischen Festkörperaktor 3 an.

Dies entspricht genau der Zeitspanne, für welche die Eingangskanäle des Gatters 15 einen unterschiedlichen Pegel aufweisen. Somit wird zwei Mal pro Periode ein Puls mit der Pulsbreite Δt generiert. Zur Messung der Pulsbreite Δt können bekannte digitale oder analoge Verfahren verwendet werden. Beispielhaft lässt sich auf digitalem Weg die Pulsbreite Δt durch einen Zähler messen, der z.B. über einen Quarzoszillator angesteuert wird und durch einen positiven Pegel am XOR Gatterausgang aktiviert wird. Wechselt der Pegel am Gatterausgang von logisch "1" nach "0" wird der Zählerwert übernommen und der Zähler für die nächste Messung zurückgesetzt. Der Zählerwert gibt die Pulsbreite Δt in Anzahl von Quarzoszillator-Schwingungen an. Das heißt, die Pulsbreite Δt ist gleich dem Produkt aus dem Zählerwert und der Periodendauer der Schwingungen des Quarzoszillators. Der Verfahren lässt sich unkompliziert in Hard- oder Software in einem Mikrokontroller, einer FPGA (Field Programmable Gate Array / Feldprogrammierbare Gatter-Anordnung) oder diskreter Logik realisieren.

Andere Verfahren zur Pulsbreitenmessung sind denkbar. So nutzt ein analoges Verfahren die quarzgenaue Ansteuerfunktion des Piezoringmotors. Die Periodendauer der Spannungs-Zeitfunktion und der Ladungs-Zeitfunktion sind durch die quarzgenaue Ansteuerfunktion bekannt und sehr stabil. Das Ausgangssignal des XOR Gatters 15 hat dadurch die Eigenschaften eines pulsbreiten modulierten Signals des Piezoringmotors. Die Periodendauer ist konstant und bekannt im Messintervall und die einzige variable Größe ist die Pulsbreite Δt. Ein solches Signal lässt sich analog einfach durch einen Tiefpass, z. B. ein RC-Glied, in ein proportionales Spannungs-Zeitsignal wandeln. Die Amplitude des Spannungszeitsignals ist proportional zur zu messenden Pulsbreite Δt.

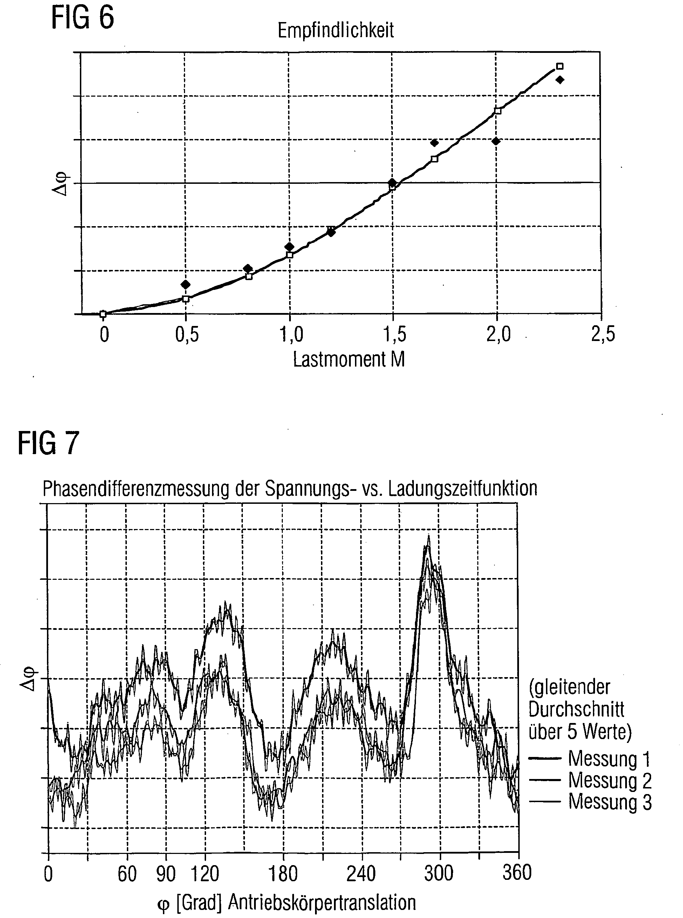

Im Diagramm aus Fig. 6 ist beispielhaft das Messergebnis einer experimentellen Untersuchung der Empfindlichkeit der Drehmomentmessung nach einem solchen Verfahren dargestellt. Der verwendete prototypische Aufbau basiert als Kernkomponente auf einem mit f = 10MHz getakteten RISC-Mikrocontroller (RISC: Reduced Instruction Set Computing / Berechnung mit reduziertem Instruktionssatz). Die XOR-Funktion und der Zähler wurden zur Vereinfachung als Software implementiert. Die Realisierung in Software bietet eine hohe Flexibilität, generiert jedoch relativ große Messfehler. Trotz des suboptimalen Aufbaus bezüglich der Messgenauigkeit wird in Fig. 6 die hohe Sensitivität deutlich.

Dabei ist zu beachten, dass bei dieser Messung dem gemessenen Drehmoment ein motoreigenes Lastmoment überlagert ist. Dieses motoreigene Lastmoment ist als Modulation abhängig vom Drehwinkel der Welle dem Messsignal überlagert. Es ist ein periodisches Signal, das sich mit jeder Wellendrehung wiederholt. Sichtbar wird dies in der Messung nach Fig. 7, bei der das Messsignal bei konstantem Lastmoment für drei Perioden übereinander aufgetragen wurde. Zwischen den einzelnen Perioden lässt sich eine Korrelation von mindestens 0,8 berechnen. Es ist also möglich, dieses Signal als Referenzsignal aufzunehmen und es zur Kompensation des Messfehlers zu nutzen. Der Messfehler wird durch das motoreigene innere Drehmoment verursacht. Die Messgenauigkeit lässt sich dadurch weiter steigern.

Vorteile der Phasendifferenzmessung am Piezoringmotor sind, dass keine Driftproblematik besteht, ein einfacher Aufbau, eine sehr hohe Empfindlichkeit und eine unabhängig von der Ansteuerung des Piezoringmotors hinsichtlich insbesondere Amplitude und Offsets.

Nachteilig ist, dass das Verfahren nur im Motorbetrieb arbeitet, d. h. bei periodischer Ansteuerung der piezoelektrischen Aktoren. Bei Motorstillstand wird daher ein anderes Messverfahren verwendet. Die Parallelschaltung eines einfachen Schaltungsblockes zur Messung des Lastmomentes bei Motorstillstand ist jedoch unproblematisch. Ein solches Messverfahren beruht auf der direkten Kraftübertragung von der Motorwelle 2 über den Kontaktpunkt auf den Antriebskörper 4 und die Festkörperaktoren 4. Ein Lastmoment M führt über diese Wirkungskette zu einer proportionalen Kraft F auf die Festkörperaktoren 4. Die Festkörperaktoren 4 setzen diese Kraft in eine proportionale Ladung als einem Sensoreffekt um. Die Größe dieser Ladung q kann gemessen werden und ist dem Drehmoment M proportional.

Das Verfahren benötigt insbesondere mehr als eine halbe Periode zur Phasendifferenzmessung. Durch Nutzung der Signale der piezoelektrischen Aktoren der X- und Y-Achse des Motors können vier Phasendifferenzmessungen pro Periode durchgeführt werden. Beispielhaft bedeutet dies bei einem Piezoringmotor mit einer Verzahnung von 300 Zähnen und einem Zahn Differenz zwischen Ring und Welle 1200 Drehmomentmessungen pro Wellendrehung.

Gemäß alternativer Ausführungsformen können verschiedene Modifikation einzeln oder in Kombination vorgenommen werden. So kann z.B. anstelle der Erfassung von Nulldurchgängen prinzipiell jeder beliebige andere Kurvenpunkt, beispielsweise deren Extremwerte, verwendet werden. Nulldurchgänge sind jedoch am einfachsten und sichersten erfassbar:

Neben der Messung einer solchen Phasendifferenz $\Delta\varphi$ zur Lastbestimmung an einem einzigen der Festkörperaktoren 3 kann eine solche Messung auch parallel an allen solcher Festkörperaktoren 3 durchgeführt werden. Insbesondere ist eine Umsetzung auch auf Festkörperaktor-Antriebsvorrichtungen möglich, welche mehr als zwei Festkörperaktoren 3 und/oder Festkörperaktoren 3 in einem anderen Winkelverhältnis als 90° aufweisen.

Neben dem Anlegen einer Spannung bzw. Spannungskurve u(t) zum Erregen der Festkörperaktoren 3 und dem Abgreifen einer Ladungskurve q(t) zur Lastbestimmung kann im Fall einer Erregung durch Anlegen von Ladungen an die Festkörperaktoren 3 gemäß einer Ladungsfunktion entsprechend eine lastabhängige Spannungsfunktion erfasst und zur Lastbestimmung verwendet werden. Verallgemeinert kann dies ausgedrückt werden durch einen Festkörperaktor 3, welcher mittels einer Steuergröße, z. B. einer Spannung, angesteuert wird und welcher aufgrund einer auf diesen einwirkenden Last in Form eines Lastmoments mit einer daraus resultierenden lastabhängigen Größe, z.B. der Ladung, reagiert, wobei eine Phasendifferenz $\Delta\varphi$ zwischen diesen beiden Größen gemessen wird.

**Patentansprüche**

1. Verfahren zur Lastdetektion an einer Festkörper-Antriebsvorrichtung (0), die

   - eine Welle (2),
   - zumindest einen Antriebskörper (4) mit einer Öffnung (40), durch welche eine Welle (2) führt,
   - und zumindest zwei Festkörperaktoren (3) am Antriebskörper (4) aufweist
   - und die Festkörperaktoren (3) mittels einer Steuergröße (u(t)) ansteuerbar sind zum Erregen des Antriebskörpers (4) zum Versetzen der Welle (2) in Rotation,
   - und ein Lastmoment (M) mittels einer festkörperabgegriffenen Größe bestimmt wird,
   - und an zumindest einem der Festkörperaktoren (3) als die Größe eine aus dem Lastmoment (M) resultierende lastabhängige Größe (q(t)) gemessen wird,

   **dadurch gekennzeichnet, dass**
   - eine Phasendifferenz ($\Delta\varphi$) zwischen der Steuergröße (u(t)) und der lastabhängigen Größe (q(t)) bestimmt wird
   - und das Lastmoment (M) mittels der Phasendifferenz ($\Delta\varphi$) bestimmt wird,
   - und das Verfahren zur Lastdetektion auf der lastabhängigen Verschiebung des Kontaktpunktes ($x_K$, $y_K$) zwischen Welle (2) und Antriebskörper (4) durch ein einwirkendes Lastmoment (M) basiert.

2. Verfahren nach Anspruch 1, **dadurch gekennzeichnet, dass** als die Steuergröße eine Spannungszeitfunktion (u(t)) und als die lastabhängige Größe eine Strom- oder Ladungszeitfunktion (q(t)) verwendet wird.

3. Verfahren nach Anspruch 1, **dadurch gekennzeichnet, dass** als die Steuergröße eine Strom- oder Ladungszeitfunktion (u(t)) und als die lastabhängige Größe eine Spannungszeitfunktion (q(t)) verwendet wird.

4. Verfahren nach einem der vorhergehenden Ansprüche, **dadurch gekennzeichnet, dass** die Phasendifferenz ($\Delta\varphi$) zwischen einerseits Nulldurchgängen der Steuergröße (u(t)) und andererseits Nulldurchgängen der lastabhängigen Größe (q(t)) bestimmt wird.

5. Verfahren nach einem der vorhergehenden Ansprüche, **dadurch gekennzeichnet, dass** zum Erfassen der Phasenverschiebung ($\Delta\varphi$) Nulldurchgänge der Steuergröße (u(t)) und Nulldurchgänge der von dem mindestens einen Festkörperaktor (3) abgegriffenen lastabhängigen Größe (q(t)) bestimmt werden.

6. Verfahren nach einem der vorhergehenden Ansprüche, **dadurch gekennzeichnet, dass**

   - die Steuergröße (u(t)) und die von dem mindestens einen Festkörperaktor (3) abgegriffene lastabhängige Größe (q(t)) hochpass-gefiltert werden
   - und jeweils Nulldurchgänge detektiert werden
   - und die Ausgangssignale der Bestimmung der Nulldurchgänge Ausschließlich-Oder verglichen werden

**7.** Verfahren nach einem der vorhergehende Ansprüche, **dadurch gekennzeichnet, dass** eine Pulsbreite Δt bestimmt wird gemäß

$$\Delta t = \frac{T}{2\pi} \cdot \Delta\varphi$$

durch Zählen eines Zählerwerts und einer Periodendauer T von Schwingungen eines Oszillators.

**8.** Verfahren nach einem der vorhergehenden Ansprüche, **dadurch gekennzeichnet, dass** ein motoreigenes als Modulation abhängig vom Drehwinkel der Welle (2) dem Messsignal überlagertes Lastmoment als Referenzsignal aufgenommen und zur Kompensation des motoreigenen Lastmoments genutzt wird.

**9.** Verfahren nach einem der vorhergehende Ansprüche, **dadurch gekennzeichnet, dass** das Lastmoment (M) aus der lastabhängigen Phasenverschiebung (Δφ) näherungsweise bestimmt wird gemäß

$$M = \sin\Delta\varphi \cdot c \cdot a \cdot r$$

mit einer Sensorkonstante c·a des Festkörperaktors (3), r als Wellenradius der Welle (2) und Δφ als der resultierenden lastabhängigen Phasenverschiebung.

**Claims**

**1.** Method for load detection on a solid state drive device (0) comprising

    - a shaft (2),
    - at least one drive body (4) having an opening (40) through which a shaft (2) leads,
    - and at least two solid state actuators (3) on the drive body (4),
    - and the solid state actuators (3) can be driven by means of a control variable (u(t)) for the purpose of exciting the drive body (4) for the purpose of causing the shaft (2) to effect rotation,
    - and a load torque (M) is determined by means of a variable tapped off from a solid state actuator,
    - and a load-dependent variable (q(t)) resulting from the load torque (M) is measured as the variable on at least one of the solid state actuators (3), **characterized in that**
    - a phase difference (Δφ) between the control variable (u(t)) and the load-dependent variable (q(t)) is determined,
    - and the load torque (M) is determined by means of the phase difference (Δφ),
    - and the method for load detection is based on the load-dependent displacement of the contact point ($x_K$, $y_K$) between shaft (2) and drive body (4) by a load torque (M) acting thereon.

**2.** Method according to Claim 1, **characterized in that** a voltage-time function (u(t)) is used as the control variable and a current- or charge-time function (q(t)) is used as the load-dependent variable.

**3.** Method according to Claim 1, **characterized in that** a current- or charge-time function (u(t)) is used as the control variable and a voltage-time function (q(t)) is used as the load-dependent variable.

**4.** Method according to any of the preceding claims, **characterized in that** the phase difference (Δφ) between zero crossings of the control variable (u(t)), on the one hand, and zero crossings of the load-dependent variable (q(t)), on the other hand, is determined.

**5.** Method according to any of the preceding claims, **characterized in that** zero crossings of the control variable (u(t)) and zero crossings of the load-dependent variable (q(t)) tapped off from the at least one solid state actuator (3) are determined for the purpose of detecting the phase shift (Δφ).

**6.** Method according to any of the preceding claims, **characterized in that**

    - the control variable (u(t)) and the load-dependent variable (q(t)) tapped off from the at least one solid state actuator (3) are subjected to high-pass filtering
    - and zero crossings are detected in each case
    - and the output signals of the determination of the zero crossings are subjected to exclusive-or comparison.

**7.** Method according to any of the preceding claims, **characterized in that** a pulse width Δt is determined in accordance with

$$\Delta t = \frac{T}{2\pi} \cdot \Delta\varphi$$

by counting a counter value and a period duration T of oscillations of an oscillator.

8. Method according to any of the preceding claims, **characterized in that** a motor-inherent load torque superposed on the measurement signal as modulation depending on the rotational angle of the shaft (2) is picked up as reference signal and utilized for the compensation of the motor-inherent load torque.

9. Method according to any of the preceding claims, **characterized in that** the load torque (M) is approximately determined from the load-dependent phase shift ($\Delta\varphi$) in accordance with

$$M = \sin\Delta\varphi \cdot c \cdot a \cdot r$$

with a sensor constant c·a of the solid state actuator (3), r as shaft radius of the shaft (2) and $\Delta\varphi$ as the resulting load-dependent phase shift.

## Revendications

1. Procédé de détection de la charge appliquée sur un dispositif d'entraînement (0) d'un corps solide, le dispositif présentant

   - un arbre (2),
   - au moins un corps d'entraînement (4) doté d'une ouverture (40) que traverse un arbre (2),
   - au moins deux actionneurs (3) de corps solide prévus sur le corps d'entraînement (4),
   - les actionneurs (3) de corps solide pouvant être commandés au moyen d'une grandeur de commande (u(t)) en vue d'exciter le corps d'entraînement (4) de telle sorte qu'il place l'arbre (2) en rotation,
   - un couple de charge (M) étant déterminé au moyen d'une grandeur saisie sur un actionneur de corps solide et
   - une grandeur (q(t)) dépendant de la charge et résultant du couple de charge (M) étant mesurée sur au moins l'un des actionneurs (3) de corps solide en tant que grandeur,
   **caractérisé en ce que**
   le déphasage ($\Delta\varphi$) entre la grandeur de commande (u(t)) et la grandeur (q(t)) dépendant de la charge est déterminé,
   **en ce que** le couple de charge (M) est déterminé au moyen du déphasage ($\Delta\varphi$) et
   **en ce que** le procédé de détection de la charge est basé sur le déplacement en fonction de la charge du point de contact ($x_k$, $y_k$) entre l'arbre (2) et le corps d'entraînement (4) suite à l'action d'un couple de charge (M).

2. Procédé selon la revendication 1, **caractérisé en ce qu'**une fonction temporelle de la tension (u(t)) est utilisée comme grandeur de commande et **en ce qu'**une fonction temporelle de courant ou de charge (q(t)) est utilisée comme grandeur dépendant de la charge.

3. Procédé selon la revendication 1, **caractérisé en ce qu'**une fonction temporelle de courant ou de charge (u(t)) est utilisée comme grandeur de commande et une fonction temporelle de tension (q(t)) est utilisée comme grandeur dépendant de la charge.

4. Procédé selon l'une des revendications précédentes, **caractérisé en ce que** le déphasage ($\Delta\varphi$) entre d'une part les passages par zéro de la grandeur de commande (u(t)) et d'autre part les passages par zéro de la grandeur (q(t)) dépendant de la charge est déterminé.

5. Procédé selon l'une des revendications précédentes, **caractérisé en ce que** pour déterminer le déphasage ($\Delta\varphi$), les passages par zéro de la grandeur de commande (u(t)) et les passages par zéro de la grandeur (q(t)) dépendant de la charge et saisie sur le ou les actionneurs (3) de corps solides sont déterminés.

6. Procédé selon l'une des revendications précédentes, **caractérisé en ce que** la grandeur de commande (u(t)) et la grandeur (q(t)) dépendant de la charge est saisie sur le ou les actionneurs (3) de corps solides subissent un filtrage passe-haut, **en ce que** chacun des passages par zéro est détecté et **en ce que** les signaux de sortie de la détermination des passages par zéro sont comparés en appliquant une fonction ou exclusive.

7. Procédé selon l'une des revendications précédentes, **caractérisé en ce qu'**une largeur d'impulsion $\Delta t$ est déterminée par

$$\Delta t = \frac{T}{2\pi} \cdot \Delta\varphi$$

par comptage d'une valeur d'un compteur et d'une durée T de la période d'oscillations d'un oscillateur.

8. Procédé selon l'une des revendications précédentes, **caractérisé en ce qu'**un couple de charge propre au moteur en tant que modulation dépendant de l'angle de rotation de l'arbre (2) est superposé au signal de mesure et enregistré comme signal de référence avant d'être utilisé pour compenser le couple de charge propre au moteur.

9. Procédé selon l'une des revendications précédentes, **caractérisé en ce que** le couple de charge (M) est déterminé approximativement à partir du déphasage ($\Delta\varphi$) dépendant de la charge par l'équation

$$M = \sin\Delta\varphi \cdot c \cdot a \cdot r$$

c.a représentant une constante de détecteur de l'actionneur (3) de corps solide, r le rayon de l'arbre (2) et $\Delta\varphi$ le déphasage résultant en fonction de la charge.

## FIG 1

messe $\Delta\varphi(u(t), q(t))$
bestimme $M \sim \sin\Delta\varphi$

$u(t) \rightarrow$
$\leftarrow q(t)$

$61$ ─○ ↓ $\Delta T$ oder $\Delta\varphi$ →Last

## FIG 2

---- 13 in x-Richtung
── 13 in y-Richtung

$\varphi$ [Grad]

u(t) normiert

# FIG 3

# FIG 4

FIG 5

## FIG 6

### Empfindlichkeit

Δφ

Lastmoment M

0    0,5    1,0    1,5    2,0    2,5

## FIG 7

### Phasendifferenzmessung der Spannungs- vs. Ladungszeitfunktion

Δφ

(gleitender
Durchschnitt
über 5 Werte)

—— Messung 1
—— Messung 2
—— Messung 3

0    60   90  120    180    240    300    360

φ [Grad] Antriebskörpertranslation

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19952946 A1
- US 6664710 B1
- EP 1098429 A2

- EP 1098429 B1
- JP 2001161083 A